(19) Europäisches Patentamt / European Patent Office / Office européen des brevets

(11) **EP 4 224 285 B1**

(12) **EUROPEAN PATENT SPECIFICATION**

(45) Date of publication and mention
of the grant of the patent:
**29.10.2025 Bulletin 2025/44**

(21) Application number: **23175613.1**

(22) Date of filing: **17.05.2018**

(51) International Patent Classification (IPC):
***G06F 1/16*** *(2006.01)*

(52) Cooperative Patent Classification (CPC):
**G06F 1/1616; G06F 1/1677; G06F 1/1694**

(54) **COMPUTING SYSTEM IMPLEMENTING AN ALGORITHM FOR FUSING DATA FROM INERTIAL SENSORS, AND METHOD**

RECHNERSYSTEM MIT EINEM ALGORITHMUS ZUR FUSION VON DATEN AUS TRÄGHEITSSENSOREN UND VERFAHREN

SYSTÈME INFORMATIQUE METTANT EN UVRE UN ALGORITHME POUR FUSIONNER DES DONNÉES PROVENANT DE CAPTEURS INERTIELS, ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2017 IT 201700057066**

(43) Date of publication of application:
**09.08.2023 Bulletin 2023/32**

(62) Document number(s) of the earlier application(s) in accordance with Art. 76 EPC:
**18172853.6 / 3 407 157**

(73) Proprietor: **STMicroelectronics S.r.l.**
**20864 Agrate Brianza (MB) (IT)**

(72) Inventors:
• **ZANCANATO, Alberto**
**20020 Busto Garolfo (MI) (IT)**
• **FERRAINA, Michele**
**20151 Milano (IT)**
• **RIZZARDINI, Federico**
**20019 Settimo Milanese (MI) (IT)**
• **RIVOLTA, Stefano Paolo**
**20832 Desio (MB) (IT)**

(74) Representative: **Studio Torta S.p.A.**
**Via Viotti, 9**
**10121 Torino (IT)**

(56) References cited:
**US-A1- 2015 130 725**

**Description**

The present invention relates to a computing system and to a method implemented by the computing system, in particular for fusing data originating from inertial sensors in order to calculate an existing angle between respective hardware elements of the computing system in a plurality of operating conditions of the computing system.

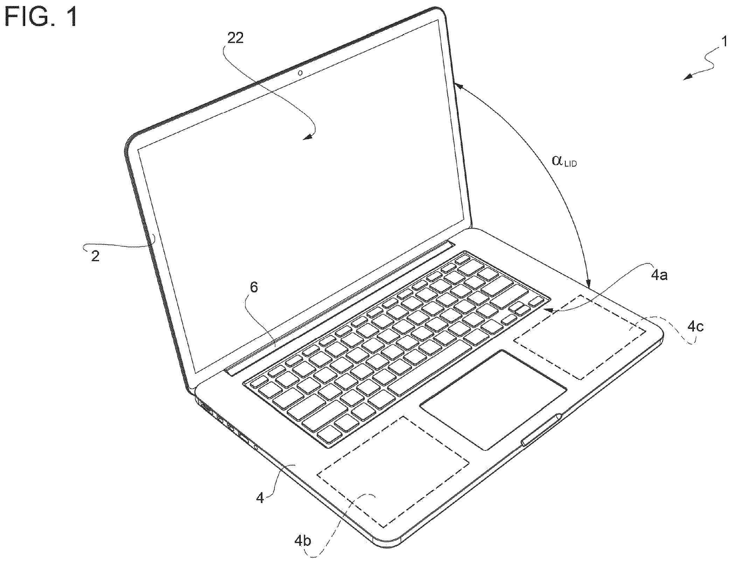

As illustrated in Figure 1, a portable computing device 1 of a known type (e.g., a notebook) is typically formed by two functional blocks 2, 4, in which the functional block 2 houses a display 2a and the functional block 4 houses a keyboard 4a and calculation and memory units 4b, 4c. The functional blocks 2 and 4 are coupled together by means of a pivot 6 configured to allow a rotary movement of the functional block 2 with respect to the functional block 4. The angle $\alpha_{LID}$ formed between the surface of the functional block 2 (corresponding to the display 2a) and the surface of the functional block 4 (corresponding to the keyboard 4a) is known as "opening angle" or as "lid angle". By convention, the angle $\alpha_{LID}$ is equal to 0° when the surface of the functional block 4 is parallel to, and directly facing the surface of the functional block 2; and is equal to 360° when the surface of the functional block 4 is parallel to the surface of the functional block 2 but oriented in the opposite direction.

The amplitude of the angle $\alpha_{LID}$ is typically used to adapt or modify a user interface displayed by means of the display 2a in order to render the portable computing device 1 more user-friendly.

With the spread of portable devices such as tablets, smartphones and the like, there has been increasing use of accessories such as keyboards external to the portable device, which are operatively coupled thereto, for example incorporated in a cover of the portable device and connected to the portable device by means of a wireless connection. These covers are provided with means for supporting/holding the portable device so as to render use thereof more similar to that of a notebook of the type illustrated in Figure 1. Also in this case, as described with reference to Figure 1, it is expedient to measure the angle $\alpha_{LID}$ formed between the display of the portable device and the upper surface of the accessory considered, for example the keyboard. It is thus possible to adapt or personalise the user interface or given configurations of the notebook 1 (or of the portable device used) on the basis of the value of the angle $\alpha_{LID}$, thus rendering the portable device more user-friendly and affording new possibilities for use thereof.

Known methods for detecting the angle $\alpha_{LID}$ envisage the use of an accelerometer mounted in the functional block 2 and an accelerometer mounted in the functional block 4. These accelerometers supply data representing the direction of the force of gravity with respect to a system of coordinates centred on said accelerometer, thus making it possible to identify a position of the functional block 2 with respect to the functional block 4. However, since known methods are based exclusively on the information provided by gravity, they do not make it possible to provide indications that are useful for all orientations and spatial arrangements of the portable device, and are moreover subject to environmental vibrational stimuli that may render the measurement imprecise or wrong.

The document US2015/130725 describes a dual-display system in which an opening angle between the two displays is calculated by using measurements of accelerometers, gyroscopes, and a reference sensor of geomagnetic field. According to this disclosure, the absolute position in the space of each display is calculated by using the measurements made by the accelerometers, the gyroscopes, and the geomagnetic sensor, and, by means of generic data-fusion algorithms, said opening angle is then calculated. This solution, envisaging the use of a geomagnetic sensor, is subject to possible errors and faults caused by unforeseeable magnetic interference and by the fact that the magnetic conditions themselves change according to the relative position of the two displays. The value of opening angle obtained by means of the system disclosed in US2015/130725 is consequently not reliable in all operating conditions.

A similar computer system is disclosed by EP2151734 A2.

The aim of the present invention is to provide a computing system and a corresponding method that will be free from the drawbacks of the prior art.

According to the present invention, a computing system and a corresponding method are provided, as defined in the annexed claims.

For a better understanding of the present invention, preferred embodiments thereof will now be described purely by way of non-limiting example with reference to the appended drawings, wherein:

- Figure 1 shows a computing device, in particular a notebook, provided with accelerometers and a calculating unit, configured to calculate an angle of opening of the display with respect to the keyboard, according to an embodiment of a known type;
- Figure 2 shows a perspective view of a computing device, in particular a notebook, provided with accelerometers, gyroscopes, and a calculating unit, configured to calculate an angle of opening of the display with respect to the keyboard, according to an embodiment of the present invention;
- Figure 3 shows a lateral view of the computing device in Figure 2 in three operating conditions alternative to one another;
- Figure 4 shows a front view of the computing device in Figure 2 in a further operating condition; and
- Figure 5 is a schematic illustration of functional blocks implemented by the computing device of Figure 2, according to an embodiment of the present invention.

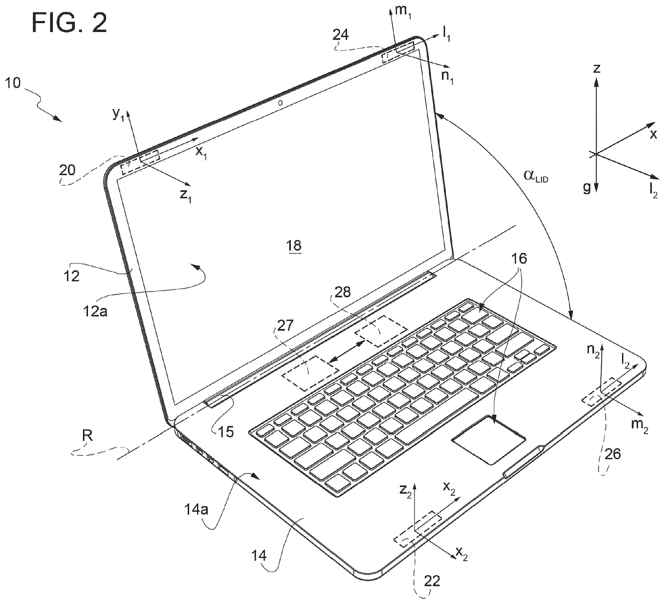

With reference to Figure 2, according to one aspect of the present invention, a computing device 10 is shown in a triaxial reference system X, Y, Z in which the vector g represents the gravitational-acceleration vector acting parallel to the axis Z.

The computing device 10, which is structurally similar to the device 1 of Figure 1, is of a portable type (in particular a notebook) and is here shown in an operating condition where the device is open. The computing device 10 includes a lid portion 12 and a base portion 14, mechanically coupled together by means of a hinge 15 that allows the lid portion 12 to rotate with respect to the base portion 14, thus forming a rotational constraint about an axis R parallel to the axis X. The base portion 14 comprises a data-input device 16 (or a number data-input of devices) (e.g., a keyboard and/or a trackpad), which extend over a surface 14a of the base portion 14. The lid portion 12 comprises a display region 18 (e.g., a screen or monitor) that extends over a surface 12a of the lid portion 12. The lid portion 12 houses (e.g., incorporates within it) a first inertial sensor 20, in particular a first accelerometer, configured to detect and/or calculate values of acceleration of the lid portion 12 along respective detection axes $x_1$, $y_1$, $z_1$; and the base portion 14 houses (e.g. incorporates within it) a second inertial sensor 22, in particular a second accelerometer, configured to detect and/or calculate values of acceleration of the base portion 14 along corresponding detection axes $x_2$, $y_2$, $z_2$. In general, the first and the second accelerometers 20, 22 are adapted to detect a movement of the computing device 10 by measuring an acceleration. The first and the second accelerometers 20, 22 are, for example, accelerometers manufactured using MEMS technology.

The first and the second accelerometers 20, 22 are therefore adapted to detect variations with respect to a state of rest of the computing device 10, or vibrations to which the computing device 10 or the environment in which the computing device 10 is located is subjected, for example, caused vibrations by a movement (e.g., walking) of the user of the computing device 10 or a means of transport on which the computing device 10 is located. Other movements that the first and the second accelerometers 20, 22 may detect include rotations imparted by the user on the computing device 10, and the change of a mutual position between the lid portion 12 and the base portion 14 (for example, due to opening and closing of the lid portion, which rotates about the axis R as a result of the presence of the hinge 15). In this latter case, in particular, the first and the second accelerometers 20, 22 are used to determine the opening angle $\alpha_{LID}$ between the detection axis $y_1$ and the axis $y_2$ of the respective first and second accelerometers 20, 22. The opening angle $\alpha_{LID}$ is hence correlated with the angle existing between the surface 12a of the lid portion 12 and the surface 14a of the base portion 14, and is also known as "lid angle". In use, it is possible to correlate the value of the opening angle $\alpha_{LID}$ with a mode of use of the computing device 10 (for example, an opening angle $\alpha_{LID}$ having a value approximately equal to 130° suggests use thereof in laptop mode, whereas an opening angle $\alpha_{LID}$ having a value equal to 360° suggests use in tablet mode). It is thus possible to adapt the graphic interface appearing on the display 18 to the type of operating mode, or else to adapt other operating parameters of the computing device 10, for example, to enable the touch-screen function when use of the device in tablet mode is detected, or else to vary yet other parameters such as switching-on/switching-off of the display or of the computing device 10 if the value of the opening angle is greater/less than a certain threshold.

According to one aspect of the present invention, the lid portion 12 moreover houses (e.g., incorporates within it) a third inertial sensor 24, in particular a first gyroscope, configured to detect and/or calculate an orientation and rotation of the lid portion 12 along and about detection axes $l_1$, $m_1$, $n_1$ that are parallel to the detection axes $x_1$, $y_1$, $z_1$, respectively, of the first accelerometer 20; and the base portion 14 moreover houses (e.g., incorporates within it) a fourth inertial sensor 26, in particular a second gyroscope, configured to detect and/or calculate an orientation and rotation of the base portion 14 along and about detection axes $l_2$, $m_2$, $n_2$ that are parallel to the detection axes $x_2$, $y_2$, $z_2$, respectively, of the second accelerometer 22.

It should be noted that, in the embodiment of the computing device 10 considered here, the axis R of the hinge 15 is always parallel to the detection axes $x_1$, $x_2$, $l_1$, $l_2$ in any operating condition (with the lid portion 12 closed or open) and for any orientation of the device 10 in the triaxial system X, Y, Z.

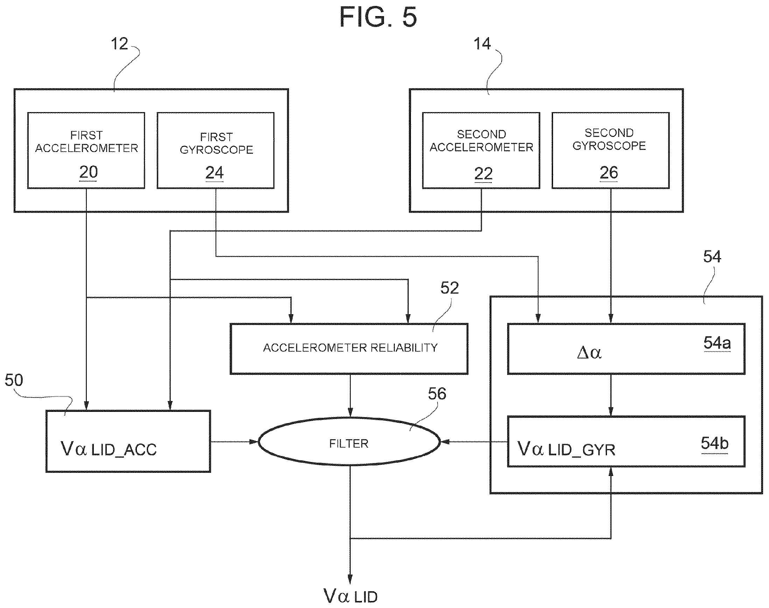

The computing device 10 moreover comprises a calculating unit 27 and a memory unit 28, which are coupled together. The calculating unit 27 and/or the memory unit 28 are also operatively coupled to the first and the second accelerometers 20, 22 and to the first and to the second gyroscopes 24, 26 to receive therefrom the respective operating signals generated at output (the signals of acceleration/angular rate generated according to operation of the accelerometers and of the gyroscopes, which is in itself known). The signals received at input by the calculating unit are processed as described more fully hereinafter with reference to Figure 5.

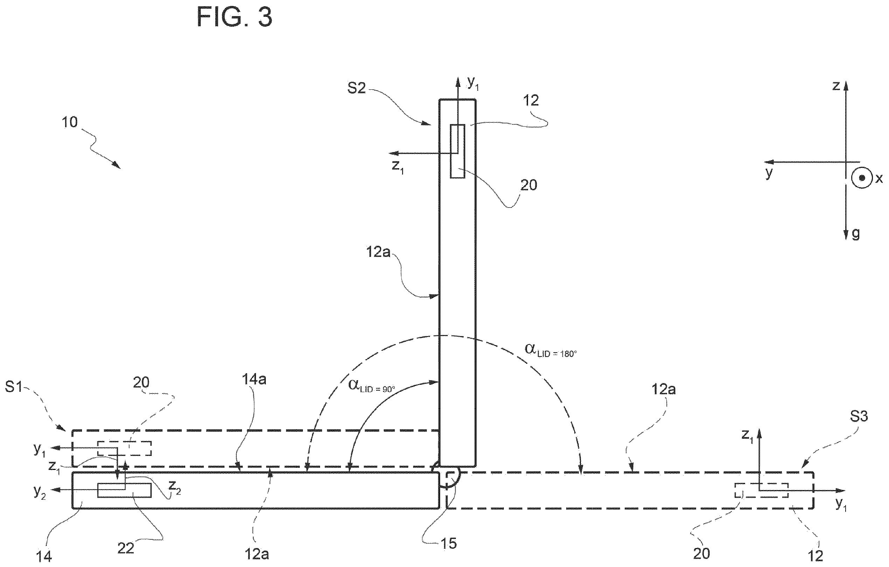

Figure 3 illustrates, in a lateral view in the plane YZ, the computing device 10 of Figure 2, where the lid portion 12 is represented in three possible operating conditions S1-S3: the lid portion 12 closed on the base portion 14 to define an angle $\alpha_{LID}$ having a zero value (S1); the lid portion 12 defining an angle $\alpha_{LID}$ equal to 90° with respect to the base portion 14 (S2); and the lid portion 12 defining an angle $\alpha_{LID}$ equal to 180° with respect to the base portion 14 (S3).

In the operating conditions S1-S3, the angle $\alpha_{LID}$ is the relative angle between the detection axis $y_1$ and the detection axis $y_2$ of the accelerometers 20 and 22, and since it has been assumed that these detection axes $y_1$, $y_2$ are parallel to the surfaces 12a, 14a of the lid portion 12 and of the base portion 14, respectively, the angle $\alpha_{LID}$ is also the relative angle between the surfaces 12a, 14a of the lid portion 12 and of the base portion 14. By determining the value of the angle $\alpha_{LID}$, it is hence possible to determine the angle of opening (or lid angle) of the lid portion 12 with respect to the base portion 14. The same angular quantity can be defined between the axes $z_1$ and $z_2$, which are always normal to the surfaces.

Upon passage from the operating condition S1 to the operating condition S2 (or likewise from the operating condition S2 to the operating condition S3), the first accelerometer 20 detects a variation in the component of the gravitational-acceleration vector g along the axes $z_1$ and $y_1$ and determines that the angle $\alpha_{LID}$ increases (the reverse applies in the case of passage from the condition S2 to the condition S1, or from the condition S3 to the condition S2).

It may be noted in particular that, in the operating condition S1, the gravitational-acceleration vector is given exclusively by the value detected on the axis $z_1$, and in the operating condition S2 it is given exclusively by the value detected on the axis $y_1$. In an intermediate condition, for example, when the angle $\alpha_{LID}$ is equal to 45°, along both the axes $y_1$ and $z_1$ the same acceleration value is obtained.

In the operating condition S1, the detection axis $z_1$ is parallel to the gravitational-acceleration vector g (the projection of the vector g on the axis $z_1$ is maximum), in the operating condition S2, the detection axis $z_1$ is orthogonal to the gravitational-acceleration vector g (the projection of the vector g on the axis $z_1$ is minimum), and in the operating condition S3, the detection axis $z_1$ is parallel to the gravitational-acceleration vector g, but in the opposite direction with respect to the operating condition S1 (the projection of the vector g on the axis $z_1$ is maximum, but with an opposite value).

In order to calculate a value of the angle $\alpha_{LID}$, it is possible to make use of the projection of the gravitational-acceleration vector g on the corresponding three detection axes of the first and the second accelerometers 20, 22, taking into consideration the constraints due to the presence of the hinge 15. In this case, the value $V\alpha_{LID\_ACC}$ of the angle $\alpha_{LID}$ can be calculated as:

$$\mathrm{atan2}\left(\frac{A_{z1}A_{y2} - A_{y1}A_{z2}}{A_{z1}A_{z2} + A_{y1}A_{y2}}\right) + \pi \quad \mathrm{(rad)} \qquad (1)$$

where atan2 is the known trigonometric function, $A_{z1}$ is the acceleration value detected by the first accelerometer 20 along the detection axis $z_1$, $A_{y1}$ is the acceleration value detected by the first accelerometer 20 along the detection axis $y_1$, $A_{z2}$ is the acceleration value detected by the second accelerometer 22 along the detection axis $z_2$, and $A_{y2}$ is the acceleration value detected by the second accelerometer 22 along the detection axis $y_2$.

Formula (1) shows how the value $V\alpha_{LID\_ACC}$ measured via the accelerometers 20, 22 represents a relative orientation (i.e., not an absolute orientation in space) between the lid portion 12 and the base portion 14.

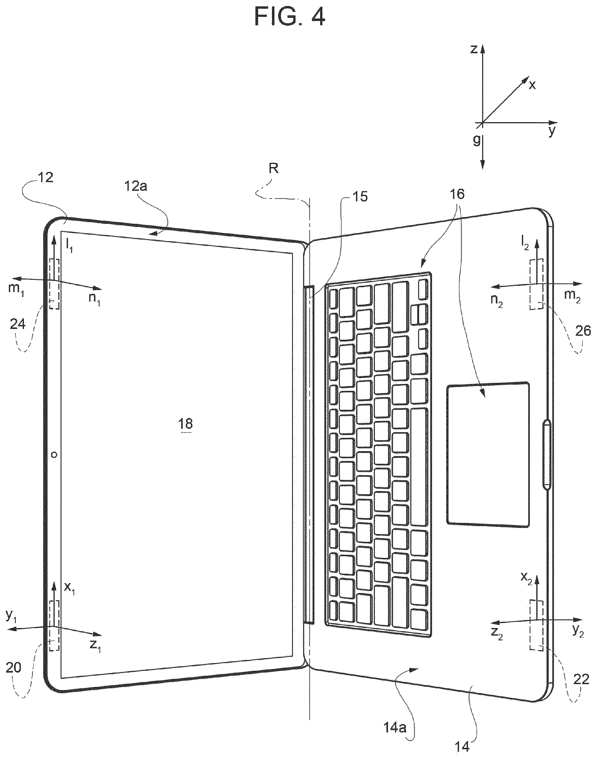

Figure 4 shows a mode of use of the computing device 10 in which the computing device 10 is oriented with the axis R parallel to the axis Z, i.e., parallel to the gravity vector g. In this case, passage into the operating conditions S1-S2-S3 does not give rise to any variation in the acceleration component along the detection axes $z_1$, $z_2$ and $y_1$, $y_2$ of the first and the second accelerometers 20, 22, since the component of the force of gravity along the axes indicated is always zero or substantially zero (the values $A_{z1}$, $A_{z2}$ and $A_{y1}$, $A_{y2}$ in formula (1) are approximately zero).

Situations of intermediate orientation where the axis R forms an angle of less than 90° but greater than 0° with the axis Z lead to measurements of the angle $\alpha_{LID}$ that are the further away from the true value, the closer the orientation approaches the condition of Figure 4 (axis R parallel to the axis Z).

What has been described with reference to Figure 4 also applies, in a way that is in itself obvious, to the operating condition (not illustrated) wherein the computing device 10 is oriented with the axis R parallel to the axis Z, but rotated through 180° with respect to the orientation shown in Figure 4.

In order to overcome the above disadvantage, according to one aspect of the present invention, the measurements obtained from the first and the second accelerometers 20, 22 are fused with the measurements obtained from the first and from the second gyroscopes 24, 26, for example assigning to the measurements obtained from the first and from the second gyroscopes 24, 26 a weight that is the greater and, accordingly, assigning to the measurements obtained from the first and from the second accelerometers 20, 22 a weight that is the smaller, the closer the angle approaches the condition of Figure 4 wherein the axis R is parallel to the axis Z (the axis Z being, as already said, parallel to the gravitational-acceleration vector g).

In other words, the more the angle between the axis R and the axis Z (analogously, the angle between the axis R and the gravitational-acceleration vector g) decreases (such angle being equal to 0° when axis R and vector g coincides or are parallel), the greater is the weight assigned to the measurements obtained from the first and from the second gyroscopes 24, 26 and, the lower is the weight assigned to the measurements obtained from the first and from the second accelerometers 20, 22.

In this way, it is also possible to filter the linear accelerations (i.e., ones not due to the force of gravity).

The use of the gyroscopes solves two problems: (i) use of the processing device like "a book"; and (ii) filtering of the linear accelerations (amongst which, in situations where the user is walking or with fast opening and closing of the base and lid portions).

The present applicant has, in fact, found that a system including just two accelerometers would not be able to overcome the two problems referred to above; as regards filtering of the linear accelerations, in actual fact, the estimate becomes reliable only when the device 1 is substantially stationary (the accelerometers detect only the acceleration of gravity and calculate the angle comprised between the two gravity vectors detected). Fusion of the data with the data of the gyroscopes is not carried out occasionally: as will be described more fully in what follows, according to one aspect of the present invention, a complementary filter is used (but other types of filtering, e.g., Kalman filtering, may also used) and the accelerometric component is discarded or attenuated when the conditions presented above in points (i) and (ii) arise. In this way, not only are the deficiencies of the prior art overcome in the conditions of points (i) and (ii), but the system becomes more reactive (if only the accelerometers were used, it would be necessary to carry out a low-pass filtering, thus introducing latencies). The accelerometric component has, specifically, the function of correcting the drift of the angle calculated with the gyroscopes.

The gyroscopic contribution obtained by means of the measurements of the first and the second gyroscopes 24, 26 acquired at a current instant t in time is given by:

$$\Delta\alpha = (\omega_{x1} - \omega_{x2}) \cdot dt \tag{2}$$

where $\omega_{x1}$ is the angular rate measured by the first gyroscope 24, $\omega_{x2}$ is the angular rate measured by the second gyroscope 26. The value dt is the time that has elapsed between the instant t-1 and the instant t (sampling time or data-acquisition time of the output of the gyroscopes 24, 26, which in turn may depend upon the update time of the system, for example, corresponding to a rate of between 25 Hz and 200 Hz). For example, if sampling of the output of the gyroscopes is made at 100 Hz, the parameter dt is equal to 0.01 seconds.

According to one aspect of the present invention, the calculating unit 27, with the possible support of the memory unit 28, is configured for performing the operations shown in Figure 5 and described below. Figure 5 is a schematic illustration of functional blocks implemented, via software, by the calculating unit 27 and memory unit 28. It is evident that the functional blocks in Figure 5 may be implemented via hardware, in a way that is in itself evident to the person skilled in the art.

In a typical condition of use of the computing device 10, the base portion 14 of the computing device 10 lies in a horizontal plane XY, supported on an ideally flat surface. The detection axis $z_1$ of the first accelerometer 20 is perpendicular to the display 18 and yields information relative to the gravitational acceleration that varies as a function of the opening angle $\alpha_{LID}$. The second accelerometer 22 has its respective detection axis $z_2$, which in this operating condition is orthogonal to the plane XY and to the surface 14a of the base portion 14.

Since the accelerometers 20, 22 are in a fixed position and the orientation of the detection axes are known, it is possible to calculate the value $V\alpha_{LID\_ACC}$ of the angle $\alpha_{LID}$ as expressed in formula (1).

When the detection axis $z_1$ is perfectly horizontal (i.e., parallel to the axis Y or to the plane XY), we are in a condition of zero gravitational force, and a signal $S_{z1}$ generated at output from the first accelerometer 20 has a first value $S_{z1}'$; when the detection axis $z_1$ is perfectly vertical (i.e., is parallel to the axis Z or to the plane XZ), we are in a condition of maximum gravitational force along $z_1$ and minimum gravitational force along $x_1$ and $y_1$, and the signal S generated at output from the first accelerometer 20 has a second value $S_{z1}''$. Intermediate situations generate respective signals at output from the first accelerometer 20 having a value ranging between $S_{z1}'$ and $S_{z1}''$. However, when the computing device is inclined, forming an angle between the base portion 14 and the horizontal plane XY, and in particular when the computing device is arranged in the operating condition of Figure 4, the effect of gravity along the detection axes $z_1$ and $z_2$ varies; in particular, it decreases until it becomes zero in the operating condition of Figure 4. It is hence evident that the calculation of the value $V\alpha_{LID\_ACC}$ using formula (1), which only makes use of the output signals generated by the first and by the second accelerometers 20, 22, becomes increasingly unreliable, the closer the arrangement of the computing device approaches the operating condition of Figure 4.

To overcome this drawback, which is caused in particular by the conditions (i) and (ii) set forth above, and yield results that are reliable, in terms of calculation of the angle $\alpha_{LID}$ in all the possible conditions in which the computing device 10 is used, it is convenient to fuse the measurements of the accelerometers 20, 22 with the measurements of the gyroscopes 24, 26.

Thus, with reference to Figure 5, a first calculation block 50 implements the formula (1). For this purpose, the first calculation block 50 receives at input the acceleration values $A_{z1}$, $A_{y1}$, $A_{z2}$, and $A_{y2}$ from the first and from the second accelerometers 20, 22 and yields at output a value $V\alpha_{LID\_ACC}$ of the opening angle $\alpha_{LID}$.

Once again with reference to Figure 5, a reliability block 52 receives at input, from the first and from the second accelerometers 20, 22, (gravitational) acceleration values $A_{x1}$, $A_{x2}$ detected by the respective accelerometer along the detection axes $x_1$ and $x_2$, respectively. Under operating conditions in which the detection axes $x_1$ and $x_2$ are parallel to the horizontal plane XY, the acceleration values $A_{x1}$, $A_{x2}$ have the minimum value. Instead, in the operating condition of Figure 4, the acceleration values $A_{x1}$, $A_{x2}$ have the maximum value (the minimum and maximum values depend on the type of inertial sensor used and are defined by the manufacturer). In one embodiment, it is thus possible to define a reliability threshold below which the calculation of the opening angle $\alpha_{LID}$ obtained using formula (1) is deemed correct or reliable, and above which the calculation of the opening angle $\alpha_{LID}$ obtained using formula (1) is not deemed correct or reliable. In the case of the computing device 10 of the type illustrated in Figures 2-4, where the base portion 14 is integral with respect to the lid portion 12, it is possible to evaluate reliability by analysing only one of the acceleration values $A_{x1}$, $A_{x2}$. However, since the base portion 14 might, in general, not be integral with respect to the lid portion 12, it is preferable to evaluate both the acceleration values $A_{x1}$, $A_{x2}$. In this latter case, calculation of the value $V\alpha_{LID\_ACC}$ of the opening angle $\alpha_{LID}$ obtained using the formula (1) is considered reliable only if both the acceleration values $A_{x1}$, $A_{x2}$ are below the predetermined threshold. The reliability block 52 generates at output a reliability value k, which may be a binary value in the case of a single threshold (reliable/unreliable), or a value that is proportional to a degree of reliability found. In this latter case, it is possible to envisage a plurality of comparison thresholds for the acceleration values $A_{x1}$, $A_{x2}$ by varying the value k according to a step function, associating a different value of k to the overstepping of each threshold envisaged. The value of k will therefore vary between a minimum value and a maximum value as the acceleration values $A_{x1}$ and/or $A_{x2}$ increase; the minimum value of k may be the zero value, whereas the maximum value of k is chosen between 0 and 1 on the basis of the considerations made hereinafter with reference to the block 56 (i.e., in order to obtain adequate filtering of the vibrational components, or of the variations in the acceleration values $A_{x1}$ and/or $A_{x2}$ that are not due to the force of gravity acting on the detection axes $x_1$ and $x_2$).

The reliability block 52 may implement further functions, such as for example detection of whether a user of the computing device 10 is walking, is moving, etc. For this purpose, the reliability block 52 receives at input further parameters. It is possible, for example, to analyse some or all of the accelerometer axes, or the module integrating the accelerometer, or it is likewise possible to calculate, for each axis and/or module, statistical indicators such as mean, variance, zero-crossing, peaks, maximum and minimum, etc. These parameters may also be taken into consideration for the gyroscope.

A second calculation block 54 is configured to receive at input the values of angular rate $\omega_{x1}$, $\omega_{x2}$ detected by the first and by the second gyroscopes 24, 26 and calculating the value $V\alpha_{LID\_GYR}$ of the opening angle $\alpha_{LID}$ on the basis of the formula (3) given in what follows.

For this purpose, the second calculation block 54 includes a sub-block 54a, which is configured to calculate (at the instant t) the variation $\Delta_\alpha$ of the value $V\alpha_{LID}$ of the opening angle $\alpha_{LID}$ with respect to the value previously measured (at the previous instant t-1), according to formula (2) appearing above.

In addition, the second calculation block 54 includes a further sub-block 54b configured to receive the value of variation $\Delta_\alpha$ and the last value $V\alpha_{LID}(t-1)$ of the opening angle $\alpha_{LID}$ calculated and deemed reliable (e.g., generated at output from the block 56 described hereinafter), and updating recursively said last value $V\alpha_{LID}(t-1)$ of the opening angle using the value of variation $\Delta_\alpha$.

The sub-block 54b thus implements the following formula (3) (as, on the other hand, is illustrated graphically also in Figure 5):

$$V\alpha_{LID\_GYR}(t) = \Delta_\alpha + V\alpha_{LID}(t-1) \qquad (3)$$

A fusion block 56 has the function of generating a final value, which is deemed reliable, of the opening angle $\alpha_{LID}$ on the basis of the reliability value k calculated by the reliability block 52. The fusion block 56 receives at input both of the values of the opening angle $\alpha_{LID}$ calculated according to formula (1) (i.e., using only the signals of the accelerometers 20, 22) and according to formula (3) (i.e., updating the last value $V\alpha_{LID}$ calculated using an angular variation obtained by means of measurements supplied by the gyroscopes 24, 26).

For greater clarity, in the sequel of the description and in Figure 5, the value of the opening angle $\alpha_{LID}$ calculated according to the formula (1) is identified as $V\alpha_{LID\_ACC}$ and the value of the opening angle $\alpha_{LID}$ calculated according to the formula (3) is identified as $V\alpha_{LID\_GYR}$.

The fusion block 56 implements a complementary filter, defined by the following formula (4):

$$V\alpha_{LID}(t) = k \cdot V\alpha_{LID\_ACC}(t) + (1-k) \cdot V\alpha_{LID\_GYR}(t) \qquad (4)$$

The ricursiveness of the complementary filter may be better appreciated by expanding, in formula (4), the term $V\alpha_{LID\_GYR}(t)$ with the relative formulas (2) and (3), thus obtaining:

$$V\alpha_{LID}(t) = k \cdot V\alpha_{LID\_ACC}(t) + (1-k) \cdot ((\omega_{x1}-\omega_{x2}) \cdot dt + V\alpha_{LID}(t-1))$$

On the first iteration of the method for calculating the value $V\alpha_{LID}(t)$ according to Figure 5, since there is no value $V\alpha_{LID}(t-1)$ for the previous instant t-1 as required by the sub-block 54b, for example $V_{\alpha LID}(t)$, is set equal to $V\alpha_{LID\_ACC}(t)$ or equal to a predefined value.

By appropriately setting the value of k, the complementary filter of formula (4) makes it possible to perform low-pass filtering of the component $V\alpha_{LID\_ACC}$ (thus filtering out the pulse signals caused by instantaneous vibrations or movements and detected by the accelerometers) and high-pass filtering of the component $V\alpha_{LID\_GYR}$. For example, the value of k may vary between k=0, in the case where the measurements obtained from the accelerometers (output from the reliability block 52) have proven to be unreliable, and k=0.1 in the case where they are fully reliable. Intermediate values of k between 0 and 0.1 may be used in the case where the reliability block 52 envisages use of a plurality of thresholds, as described previously. It is evident that the value of k may differ from the values indicated previously and may vary, for example, between 0 and 0.5, preferably between 0 and 0.2, in order to ensure low-pass filtering in any event.

The applicant has found that, in general, the results from the calculation of the opening angle $\alpha_{LID}$ obtained using the gyroscopes 24, 26 are more accurate, in the short term, than those obtained using only the accelerometers 20, 22. This is due to the fact that the gyroscopes are not sensitive to high-frequency disturbances, as is, instead, the case for the accelerometers. However, errors associated to the calculation of the angle $\alpha_{LID}$ using the signals supplied by the gyroscopes (e.g., integration errors, drift, etc.) may add up over time, giving rise to a cumulative error of a significant amount. Consequently, the filtering operation performed by the fusion block 56 presents the dual advantage of overcoming both the drawbacks associated to calculation of the opening angle made using only accelerometers (already discussed previously) and the drawbacks associated to calculation of the opening angle made using only gyroscopes (error accumulation and lack of knowledge of the initial opening angle at the moment when the system is switched on).

From what has been described above, the advantages of the present invention emerge clearly.

In particular, the operations of calculation of the opening angle between the lid portion 12 and the base portion 14 do not require calculation of the absolute orientation of the lid portion 12 and of the base portion 14, unlike the solutions according to the prior art in which measurements are made of absolute orientation in space of respective functional blocks, with respect to which an opening angle is to be calculated.

Moreover, the use of the weight k, associated, as has been said, to an evaluation of reliability of the measurements made via the accelerometers, renders the methodology according to the present invention adaptive as a function of different operating conditions and of the service life of the accelerometers themselves.

The use of recursive formulas, with a closed-loop system, render moreover the system as a whole stable, fast, and with low computational load.

Finally, it is clear that modifications and variations may be made to what has been described and illustrated herein, without thereby departing from the scope of protection of the present invention, as defined in the annexed claims.

In general, in the context of the present disclosure, the angle $\alpha_{LID}$ is the angle between two elements or parts (which may even be detached or separate from one other, or without the hinge 15) which concur to form an electronic device or system for display of information. These elements or parts are, for example: a keyboard and a display; a dual-display device; a keyboard and a tablet; a keyboard and a smartphone; a smartphone and a tablet; two smartphones; two tablets; or any other combination of keyboard, tablet, smartphone, and display.

In addition, it will be noted that the accelerometers 20 and 22 and the gyroscopes 24 and 26 may be implemented: (i) in modules that are separate from each other; (ii) in 6-axis inertial sensor modules (where one module incorporates the accelerometer 20 and the gyroscope 24, and one module incorporates the accelerometer 22 and the gyroscope 26); (iii) in 9-axis inertial sensor modules (where one module incorporates the accelerometer 20, the gyroscope 24, and a magnetometer, and one module incorporates the accelerometer 22 and the gyroscope 26 and a further magnetometer). In the latter case, the magnetometer, albeit present, is not used for the purposes of the present invention.

## Claims

1.   A computing system (10) including:

- a first hardware element (12; 14), housing a first accelerometer (20; 22) and a first gyroscope (24; 26);
- a second hardware element (14; 12), housing a second accelerometer (22; 20) and a second gyroscope (26; 24), which can be oriented with respect to the first hardware element (12) and defines an opening angle ($\alpha_{LID}$) with said first hardware element (12; 14); and
- a calculating unit (27, 28) configured to perform the operations of:

acquiring, from the first and from the second accelerometers (20, 22) respective signals of acceleration measurements and from the first and from the second gyroscopes (24, 26), respective signals of angular rate measurements, said signals of acceleration and angular rate measurements being indicative of a relative orientation of the first hardware element with respect to the second hardware element, and viceversa; recursively updating a current value of said opening angle ($\alpha_{LID}$) on the basis of said signals of acceleration and angular rate measurements; and

controlling at least one function of said computing system (10) on the basis of the current value of the opening angle ($\alpha_{LID}$),
wherein the first hardware element (12; 14) is coupled to the second hardware element (14; 12) by a hinge (15) that forms a rotational constraint about a rotation axis (R),
**characterized in that**:

recursively updating includes fusing the acceleration measurements from the first and the second accelerometers (20, 22) with the angular rate measurements from the first and from the second gyroscopes (24, 26), assigning to the angular rate measurements a weight that is greater and, accordingly, assigning to the acceleration measurements a weight that is smaller, the more an angle between the rotation axis (R) and a reference axis (Z) parallel to a gravitational-acceleration vector (g) decreases;
alternatively:
recursively updating includes fusing the acceleration measurements from the first and the second accelerometers (20, 22) with the angular rate measurements from the first and from the second gyroscopes (24, 26), assigning to the angular rate measurements a weight that is greater and, accordingly, assigning to the acceleration measurements a weight that is smaller, the more the rotation axis (R) coincides with or gets closer to a reference axis (Z) parallel to a gravitational-acceleration vector (g).

2.  The computing system of claim 1, the calculating unit (27, 28) being further configured to perform the operations of:

estimating, based on the acceleration measurements, a first intermediate value ($V\alpha_{LID\_ACC}$) of said opening angle ($\alpha_{LID}$), which represents a first angular orientation of the first hardware element (12) relative to the second hardware element (14); and
estimating, based on the angular rate measurements, a second intermediate value ($V\alpha_{LID\_GYR}$) of said opening angle ($\alpha_{LID}$), which represents a second angular orientation of the first hardware element (12) relative to the second hardware element (14),
wherein recursively updating includes carrying out a weighted sum of the first intermediate value ($V\alpha_{LID\_ACC}$) and second intermediate value ($V\alpha_{LID\_GYR}$).

3.  The computing system according to claim 1 or claim 2, wherein the calculating unit (27, 28) is configured to recursively update the current value of said opening angle ($\alpha_{LID}$) based on a weight (k) indicative of a reliability of said measurements of signals of acceleration and angular rate measurements.

4.  The computing system according to anyone of the preceding claims, wherein the operation of recursively updating includes implementing a low-pass filtering of the first intermediate value ($V\alpha_{LID\_ACC}$) and a high-pass filtering of the second intermediate value ($V\alpha_{LID\_GYR}$) by means of a complementary filter.

5.  The computing system according to claim 2, wherein the operation of carrying out the weighted sum includes performing the operation:

$$k \cdot V\alpha_{LID\_ACC} + (1-k) \cdot V\alpha_{LID\_GYR}$$

where $V\alpha_{LID\_ACC}$ is the first intermediate value, $V\alpha_{LID\_GYR}$ is the second intermediate value, and k is a weight having a value equal to, or greater than, 0 and less than 1.

6.  The computing system according to claim 2, wherein the operation of carrying out the weighted sum includes implementing a recursive complementary filter defined by:

$$V\alpha_{LID}(t) = k \cdot V\alpha_{LID\_ACC}(t) + (1-k) \cdot (\Delta_\alpha + V\alpha_{LID}(t-1))$$

where:

$V\alpha_{LID}(t)$ is the current value of the opening angle ($\alpha_{LID}$);
k is a weight indicative of a reliability of said measurement signals of relative orientation of the first and the second hardware elements;

$V\alpha_{LID\_ACC}(t)$ is the first intermediate value;

$\Delta_\alpha$ is an angular variation obtained as a function of a first value ($\omega_1$) and a second value ($\omega_2$) of angular rate measured by the first and by the second gyroscopes (24, 26), respectively; and

$V\alpha_{LID}(t-1)$ is a value of the opening angle preceding in time the current value.

7. The computing system according to claim 2 or anyone of claims 3-6 when depending upon claim 2, wherein the first and the second intermediate values ($V\alpha_{LID\_ACC}$, $V\alpha_{LID\_GYR}$) are values of the opening angle ($\alpha_{LID}$) of the first hardware element (12) relative to the second hardware element (14).

8. The computing system according to anyone of the preceding claims, wherein the first hardware element (12) is provided with a first device (18) for interaction with a user, and the second hardware element (14) is provided with a second device (16) for interaction with said user,

wherein the first and the second interaction devices (18, 16) define a first surface (12a) and, respectively, a second surface (14a) directly facing each other in a first operating condition of the computing system (10), wherein:

the first accelerometer (20) is a triaxial accelerometer having a first detection axis ($z_1$), a second detection axis ($y_1$), and a third detection axis ($x_1$) of its own, which is configured to detect an acceleration of the first hardware element (12) with respect to the second hardware element (14) out of a horizontal plane (XY) parallel, in the first operating condition, to the first and to the second surfaces (12a, 14a), said signals generated by the first accelerometer (20) including acceleration values along said first, second, and third detection axes of the first accelerometer (20),

the second accelerometer (22) is a triaxial accelerometer having a first detection axis ($z_2$), a second detection axis ($y_2$), and a third detection axis ($x_2$) of its own, which is configured to detect an acceleration of the first hardware element (12) with respect to the second hardware element (14) out of a horizontal plane (XY), said signals generated by the second accelerometer (22) including acceleration values along said first, second, and third detection axes of the second accelerometer (22),

wherein the first and the second hardware elements (12, 14) can be oriented with respect to each other in such a way that, in a second operating condition of the computing system (10), the first surface (12a) is orthogonal to the second surface (14a), and wherein:

the first accelerometer (20) is oriented in such a way that, in the first operating condition, only its first detection axis ($z_1$) is subject to the gravitational acceleration and, in the second operating condition, only its second detection axis ($y_1$) is subject to the gravitational acceleration,

said calculating unit being configured to reduce a weight assigned to the first intermediate value ($\alpha_{LID\_ACC}$) and, at the same time, increasing a weight assigned to the second intermediate value ($\alpha_{LID\_GYR}$) during calculation of said sum, which is weighted as a function of the acceleration value detected along the third detection axis ($x_1$) of the first accelerometer (20) in a third operating condition in which the third detection axis ($x_1$) of the first accelerometer (20) is subject to gravitational acceleration.

9. The computing system according to claim 8 in combination with anyone of claims 3, 5, 6, wherein, in the third operating condition, the third detection axis ($x_1$) of the first accelerometer (20) forms an angle other than 90° with the gravitational-acceleration vector (g), said weight (k) having a value that is a function of the value of the angle between the third detection axis ($x_1$) of the first accelerometer (20) and the gravitational-acceleration vector (g).

10. The computing system according to claim 9, wherein, in the first operating condition, the first detection axis ($z_1$) of the first accelerometer (20) is parallel to the gravitational-acceleration vector (g), whereas the second and the third detection axes ($y_1$, $x_1$) are perpendicular to the gravitational-acceleration vector (g); and, in the second operating condition, the second detection axis ($y_1$) of the first accelerometer (20) is parallel to the gravitational-acceleration vector (g), whereas the first and third detection axes ($z_1$, $x_1$) are perpendicular to the gravitational-acceleration vector (g).

11. A method for controlling at least one parameter of a computing system (10) as a function of a value of an opening angle ($\alpha_{LID}$) between a first hardware element (12; 14) and a second hardware element (14; 12), wherein the first hardware element (12; 14) houses a first accelerometer (20; 22) and a first gyroscope (24; 26) and the second hardware element (14; 12) houses a second accelerometer (22; 20) and a second gyroscope (26; 24) and can be oriented with respect to the first hardware element (12),

the method comprising the steps of:

acquiring, from the first and from the second accelerometers (20, 22) respective signals of acceleration measurements and from the first and from the second gyroscopes (24, 26), respective signals of angular rate measurements, said signals of acceleration and angular rate measurements being indicative of a relative orientation of the first hardware element with respect to the second hardware element, and viceversa;

recursively updating a current value of said opening angle ($\alpha_{LID}$) on the basis of said signals of acceleration and angular rate measurements; and

controlling at least one function of said computing system (10) as a function of the current value of the opening angle ($\alpha_{LID}$),

wherein the first hardware element (12; 14) is coupled to the second hardware element (14; 12) by a hinge (15) that forms a rotational constraint about a rotation axis (R),

the method being **characterized by** further comprising the step of:

recursively updating includes fusing the acceleration measurements from the first and the second accelerometers (20, 22) with the angular rate measurements from the first and from the second gyroscopes (24, 26), assigning to the angular rate measurements a weight that is greater and, accordingly, assigning to the acceleration measurements a weight that is smaller, the more an angle between the rotation axis (R) and a reference axis (Z) parallel to a gravitational-acceleration vector (g) decreases;

or, alternatively, the step of:

recursively updating includes fusing the acceleration measurements from the first and the second accelerometers (20, 22) with the angular rate measurements from the first and from the second gyroscopes (24, 26), assigning to the angular rate measurements a weight that is greater and, accordingly, assigning to the acceleration measurements a weight that is smaller, the more the rotation axis (R) coincides with or gets closer to a reference axis (Z) parallel to a gravitational-acceleration vector (g).

12. The method of claim 11, further comprising the steps of:

estimating, based on the acceleration measurements, a first intermediate value ($V\alpha_{LID\_ACC}$) of said opening angle ($\alpha_{LID}$), which represents a first angular orientation of the first hardware element (12) relative to the second hardware element (14); and

estimating, based on the angular rate measurements, a second intermediate value ($V\alpha_{LID\_GYR}$) of said opening angle ($\alpha_{LID}$), which represents a second angular orientation of the first hardware element (12) relative to the second hardware element (14),

wherein recursively updating includes carrying out a weighted sum of the first intermediate value ($V\alpha_{LID\_ACC}$) and second intermediate value ($V\alpha_{LID\_GYR}$).

**Patentansprüche**

1. Rechensystem (10), das Folgendes enthält:

- ein erstes Hardwareelement (12; 14), das einen ersten Beschleunigungsmesser (20; 22) und ein erstes Gyroskop (24; 26) aufnimmt;

- ein zweites Hardwareelement (14; 12), das einen zweiten Beschleunigungsmesser (22; 20) und ein zweites Gyroskop (26; 24) aufnimmt, das in Bezug auf das erste Hardwareelement (12) ausgerichtet werden kann und einen Öffnungswinkel ($\alpha_{LID}$) mit dem ersten Hardwareelement (12; 14) definiert; und

- eine Berechnungseinheit (27, 28), die so eingerichtet ist, dass sie die folgenden Vorgänge durchführt:

Erfassen jeweiliger Signale von Beschleunigungsmessungen von dem ersten und von dem zweiten Beschleunigungsmessern (20, 22) und jeweiliger Signale von Winkelgeschwindigkeitsmessungen von dem ersten und von dem zweiten Gyroskop (24, 26), wobei die Signale der Beschleunigungs- und Winkelgeschwindigkeitsmessungen eine relative Ausrichtung des ersten Hardwareelements in Bezug auf das zweite Hardwareelement angeben und umgekehrt;

rekursives Aktualisieren eines aktuellen Werts des Öffnungswinkels ($\alpha_{LID}$) auf der Basis der Signale der Beschleunigungs- und Winkelgeschwindigkeitsmessungen; und

Steuern mindestens einer Funktion des Rechensystems (10) auf der Basis des aktuellen Werts des Öffnungswinkels ($\alpha_{LID}$), wobei das erste Hardwareelement (12; 14) mit dem zweiten Hardwareelement (14; 12) durch ein Scharnier (15) gekoppelt ist, das eine Rotationsbeschränkung um eine Rotationsachse (R) bildet,

**dadurch gekennzeichnet, dass**:

das rekursive Aktualisieren das Zusammenführen der Beschleunigungsmessungen von dem ersten und dem zweiten Beschleunigungsmesser (20, 22) mit den Winkelgeschwindigkeitsmessungen von dem ersten und dem zweiten Gyroskop (24, 26) enthält, wobei den Winkelgeschwindigkeitsmessungen ein größeres Gewicht zugewiesen wird und dementsprechend den Beschleunigungsmessungen ein geringeres Gewicht zugewiesen wird, je mehr ein Winkel zwischen der Rotationsachse (R) und einer Referenzachse (Z) parallel zu einem Gravitationsbeschleunigungsvektor (g) abnimmt;
alternativ dazu:
das rekursive Aktualisieren das Zusammenführen der Beschleunigungsmessungen von dem ersten und dem zweiten Beschleunigungsmesser (20, 22) mit den Winkelgeschwindigkeitsmessungen von dem ersten und dem zweiten Gyroskop (24, 26) enthält, wobei den Winkelgeschwindigkeitsmessungen ein größeres Gewicht zugewiesen wird und dementsprechend den Beschleunigungsmessungen ein geringeres Gewicht zugewiesen wird, je mehr die Rotationsachse (R) mit einer Referenzachse (Z) parallel zu einem Gravitationsbeschleunigungsvektor (g) übereinstimmt oder sich dieser annähert.

2. Rechensystem nach Anspruch 1, wobei die Berechnungseinheit (27, 28) ferner so eingerichtet ist, dass sie die folgenden Vorgänge durchführt:

Schätzen, basierend auf den Beschleunigungsmessungen, eines ersten Zwischenwerts ($V\alpha_{LID\_ACC}$) des Öffnungswinkels ($\alpha_{LID}$), der eine erste Winkelausrichtung des ersten Hardwareelements (12) relativ zu dem zweiten Hardwareelement (14) darstellt; und
Schätzen, basierend auf den Winkelgeschwindigkeitsmessungen, eines zweiten Zwischenwerts ($V\alpha_{LID\_GYR}$) des Öffnungswinkels ($\alpha_{LID}$), der eine zweite Winkelausrichtung des ersten Hardwareelements (12) relativ zu dem zweiten Hardwareelement (14) darstellt, wobei das rekursive Aktualisieren das Durchführen einer gewichteten Summe des ersten Zwischenwerts ($V\alpha_{LID\_ACC}$) und des zweiten Zwischenwerts ($V\alpha_{LID\_GYR}$) enthält.

3. Rechensystem nach Anspruch 1 oder 2, wobei die Berechnungseinheit (27, 28) so eingerichtet ist, dass sie den aktuellen Wert des Öffnungswinkels ($\alpha_{LID}$) rekursiv basierend auf einem Gewicht (k) aktualisiert, das die Zuverlässigkeit der Messungen der Signale der Beschleunigungs- und Winkelgeschwindigkeitsmessungen angibt.

4. Rechensystem nach einem der vorhergehenden Ansprüche, wobei der Vorgang des rekursiven Aktualisierens das Implementieren einer Tiefpassfilterung des ersten Zwischenwerts ($V\alpha_{LID\_ACC}$) und einer Hochpassfilterung des zweiten Zwischenwerts ($V\alpha_{LID\_GYR}$) mittels eines komplementären Filters enthält.

5. Rechensystem nach Anspruch 2, wobei der Vorgang des Durchführens der gewichteten Summe das Durchführen des folgenden Vorgangs umfasst:

$$k \cdot V\alpha_{LID\_ACC} + (1-k) \cdot V\alpha_{LID\_GYR}$$

wobei $V\alpha_{LID\_ACC}$ der erste Zwischenwert ist, $V\alpha_{LID\_GYR}$ der zweite Zwischenwert ist und k ein Gewicht mit einem Wert gleich oder größer als 0 und kleiner als 1 ist.

6. Rechensystem nach Anspruch 2, wobei der Vorgang des Durchführens der gewichteten Summe das Implementieren eines rekursiven komplementären Filters enthält, der definiert ist durch:

$$V\alpha_{LID}(t) = k \cdot V\alpha_{LID\_ACC}(t) + (1-k) \cdot (\Delta_\alpha + V\alpha_{LID}(t-1))$$

wobei:

$V\alpha_{LID}(t)$ der aktuelle Wert des Öffnungswinkels ($\alpha_{LID}$) ist;
k ein Gewicht ist, das die Zuverlässigkeit der Messsignale der relativen Ausrichtung des ersten und des zweiten Hardwareelements angibt;
$V\alpha_{LID\_ACC}(t)$ der erste Zwischenwert ist;

$\Delta_\alpha$ eine Winkeländerung ist, die als Funktion eines ersten Werts ($\omega_1$) und eines zweiten Werts ($\omega_2$) der Winkelgeschwindigkeit erhalten wird, die von dem ersten beziehungsweise von dem zweiten Gyroskop (24, 26) gemessen wird; und

$V\alpha_{LID}(t-1)$ ein Wert des Öffnungswinkels ist, der dem aktuellen Wert zeitlich vorausgeht.

7. Rechensystem nach Anspruch 2 oder einem der Ansprüche 3 bis 6, wenn abhängig von Anspruch 2, wobei der erste und der zweite Zwischenwert ($V\alpha_{LID\_ACC}$, $V\alpha_{LID\_GYR}$) Werte des Öffnungswinkels ($\alpha_{LID}$) des ersten Hardwareelements (12) relativ zu dem zweiten Hardwareelement (14) sind.

8. Rechensystem nach einem der vorhergehenden Ansprüche, wobei das erste Hardwareelement (12) mit einer ersten Vorrichtung (18) zur Interaktion mit einem Benutzer versehen ist und das zweite Hardwareelement (14) mit einer zweiten Vorrichtung (16) zur Interaktion mit dem Benutzer versehen ist,

wobei die erste und die zweite Interaktionsvorrichtung (18, 16) eine erste Oberfläche (12a) beziehungsweise eine zweite Oberfläche (14a) definieren, die sich in einem ersten Betriebszustand des Rechensystems (10) direkt gegenüberliegen,
wobei:

der erste Beschleunigungsmesser (20) ein dreiachsiger Beschleunigungsmesser ist, der selbst eine erste Detektionsachse ($z_1$), eine zweite Detektionsachse ($y_1$) und eine dritte Detektionsachse ($x_1$) aufweist und so eingerichtet ist, dass er eine Beschleunigung des ersten Hardwareelements (12) in Bezug auf das zweite Hardwareelement (14) aus einer horizontalen Ebene (XY) heraus detektiert, die im ersten Betriebszustand parallel zur ersten und zur zweiten Oberfläche (12a, 14a) verläuft, wobei die von dem ersten Beschleunigungsmesser (20) erzeugten Signale Beschleunigungswerte entlang der ersten, der zweiten und der dritten Detektionsachse des ersten Beschleunigungsmessers (20) enthalten,
der zweite Beschleunigungsmesser (22) ein dreiachsiger Beschleunigungsmesser ist, der selbst eine erste Detektionsachse ($z_2$), eine zweite Detektionsachse ($y_2$) und eine dritte Detektionsachse ($x_2$) aufweist und so eingerichtet ist, dass er eine Beschleunigung des ersten Hardwareelements (12) in Bezug auf das zweite Hardwareelement (14) aus einer horizontalen Ebene (XY) heraus detektiert, wobei die von dem zweiten Beschleunigungsmesser (22) erzeugten Signale Beschleunigungswerte entlang der ersten, der zweiten und der dritten Detektionsachse des zweiten Beschleunigungsmessers (22) enthalten,
wobei das erste und das zweite Hardwareelement (12, 14) zueinander so ausgerichtet werden können, dass in einem zweiten Betriebszustand des Rechensystems (10) die erste Oberfläche (12a) orthogonal zur zweiten Oberfläche (14a) ist, und wobei:

der erste Beschleunigungsmesser (20) so ausgerichtet ist, dass im ersten Betriebszustand nur seine erste Detektionsachse ($z_1$) der Gravitationsbeschleunigung unterliegt und im zweiten Betriebszustand nur seine zweite Detektionsachse ($y_1$) der Gravitationsbeschleunigung unterliegt,
die Berechnungseinheit so eingerichtet ist, dass sie ein dem ersten Zwischenwert ($\alpha_{LID\_ACC}$) zugeordnetes Gewicht reduziert und gleichzeitig ein dem zweiten Zwischenwert ($\alpha_{LID\_GYR}$) zugeordnetes Gewicht erhöht während der Berechnung der Summe, die als Funktion des entlang der dritten Detektionsachse ($x_1$) des ersten Beschleunigungsmessers (20) detektierten Beschleunigungswerts in einem dritten Betriebszustand, in dem die dritte Detektionsachse ($x_1$) des ersten Beschleunigungsmessers (20) der Gravitationsbeschleunigungunterliegt, gewichtet wird.

9. Rechensystem nach Anspruch 8 in Kombination mit einem der Ansprüche 3, 5, 6, wobei im dritten Betriebszustand die dritte Detektionsachse ($x_1$) des ersten Beschleunigungsmessers (20) einen anderen Winkel als 90° zu dem Gravitationsbeschleunigungsvektor (g) bildet, wobei das Gewicht (k) einen Wert aufweist, der eine Funktion des Werts des Winkels zwischen der dritten Detektionsachse ($x_1$) des ersten Beschleunigungsmessers (20) und dem Gravitationsbeschleunigungsvektor (g) ist.

10. Rechensystem nach Anspruch 9, wobei im ersten Betriebszustand die erste Detektionsachse ($z_1$) des ersten Beschleunigungsmessers (20) parallel zu dem Gravitationsbeschleunigungsvektor (g) verläuft, während die zweite und die dritte Detektionsachse ($y_1$, $x_1$) senkrecht zu dem Gravitationsbeschleunigungsvektor (g) verlaufen; und im zweiten Betriebszustand die zweite Detektionsachse ($y_1$) des ersten Beschleunigungsmessers (20) parallel zu dem Gravitationsbeschleunigungsvektor (g) verläuft, während die erste und die dritte Detektionsachse ($z_1$, $x_1$) senkrecht zu dem Gravitationsbeschleunigungsvektor (g) verlaufen.

**11.** Verfahren zum Steuern mindestens eines Parameters eines Rechensystems (10) als Funktion eines Werts eines Öffnungswinkels ($\alpha_{LID}$) zwischen einem ersten Hardwareelement (12; 14) und einem zweiten Hardwareelement (14; 12), wobei das erste Hardwareelement (12; 14) einen ersten Beschleunigungsmesser (20; 22) und ein erstes Gyroskop (24; 26) aufnimmt und das zweite Hardwareelement (14; 12) einen zweiten Beschleunigungsmesser (22; 20) und ein zweites Gyroskop (26; 24) aufnimmt und in Bezug auf das erste Hardwareelement (12) ausgerichtet werden kann, wobei das Verfahren die folgenden Schritte umfasst:

Erfassen jeweiliger Signale von Beschleunigungsmessungen von dem ersten und von dem zweiten Beschleunigungsmessern (20, 22) und jeweiliger Signale von Winkelgeschwindigkeitsmessungen von dem ersten und von dem zweiten Gyroskop (24, 26), wobei die Signale der Beschleunigungs- und Winkelgeschwindigkeitsmessungen eine relative Ausrichtung des ersten Hardwareelements in Bezug auf das zweite Hardwareelement angeben und umgekehrt;

rekursives Aktualisieren eines aktuellen Werts des Öffnungswinkels ($\alpha_{LID}$) auf der Basis der Signale der Beschleunigungs- und Winkelgeschwindigkeitsmessungen; und

Steuern mindestens einer Funktion des Rechensystems (10) als Funktion des aktuellen Werts des Öffnungswinkels ($\alpha_{LID}$), wobei das erste Hardwareelement (12; 14) mit dem zweiten Hardwareelement (14; 12) durch ein Scharnier (15) gekoppelt ist, das eine Rotationsbeschränkung um eine Rotationsachse (R) bildet,

wobei das Verfahren **dadurch gekennzeichnet ist, dass** es ferner den folgenden Schritt umfasst:

das rekursive Aktualisieren das Zusammenführen der Beschleunigungsmessungen von dem ersten und dem zweiten Beschleunigungsmesser (20, 22) mit den Winkelgeschwindigkeitsmessungen von dem ersten und dem zweiten Gyroskop (24, 26) enthält, wobei den Winkelgeschwindigkeitsmessungen ein größeres Gewicht zugewiesen wird und dementsprechend den Beschleunigungsmessungen ein geringeres Gewicht zugewiesen wird, je mehr ein Winkel zwischen der Rotationsachse (R) und einer Referenzachse (Z) parallel zu einem Gravitationsbeschleunigungsvektor (g) abnimmt;

oder alternativ den folgenden Schritt:

das rekursive Aktualisieren das Zusammenführen der Beschleunigungsmessungen von dem ersten und dem zweiten Beschleunigungsmesser (20, 22) mit den Winkelgeschwindigkeitsmessungen von dem ersten und dem zweiten Gyroskop (24, 26) enthält, wobei den Winkelgeschwindigkeitsmessungen ein größeres Gewicht zugewiesen wird und dementsprechend den Beschleunigungsmessungen ein geringeres Gewicht zugewiesen wird, je mehr die Rotationsachse (R) mit einer Referenzachse (Z) parallel zu einem Gravitationsbeschleunigungsvektor (g) übereinstimmt oder sich dieser annähert.

**12.** Verfahren nach Anspruch 11, das ferner die folgenden Schritte umfasst:

Schätzen, basierend auf den Beschleunigungsmessungen, eines ersten Zwischenwerts ($V\alpha_{LID\_ACC}$) des Öffnungswinkels ($\alpha_{LID}$), der eine erste Winkelausrichtung des ersten Hardwareelements (12) relativ zu dem zweiten Hardwareelement (14) darstellt; und

Schätzen, basierend auf den Winkelgeschwindigkeitsmessungen, eines zweiten Zwischenwerts ($V\alpha_{LID\_GYR}$) des Öffnungswinkels ($\alpha_{LID}$), der eine zweite Winkelausrichtung des ersten Hardwareelements (12) relativ zu dem zweiten Hardwareelement (14) darstellt, wobei das rekursive Aktualisieren das Durchführen einer gewichteten Summe des ersten Zwischenwerts ($V\alpha_{LID\_ACC}$) und des zweiten Zwischenwerts ($V\alpha_{LID\_GYR}$) enthält.

**Revendications**

**1.** Système informatique (10) comportant :

- un premier élément matériel (12 ; 14), logeant un premier accéléromètre (20 ; 22) et un premier gyroscope (24 ; 26) ;
- un second élément matériel (14 ; 12), logeant un second accéléromètre (22 ; 20) et un second gyroscope (26 ; 24), qui peut être orienté par rapport au premier élément matériel (12) et définit un angle d'ouverture ($\alpha_{LID}$) avec ledit premier élément matériel (12 ; 14) ; et
- une unité de calcul (27, 28) configurée pour réaliser les opérations suivantes :

l'acquisition, à partir des premier et second accéléromètres (20, 22), de signaux respectifs de mesures d'accélération et, à partir des premier et second gyroscopes (24, 26), de signaux respectifs de mesures de vitesse angulaire, lesdits signaux de mesures d'accélération et de vitesse angulaire étant indicatifs d'une orientation relative du premier élément matériel par rapport au second élément matériel, et inversement ;
la mise à jour récursive d'une valeur actuelle dudit angle d'ouverture ($\alpha_{LID}$) sur la base desdits signaux de mesures d'accélération et de vitesse angulaire ; et
la commande d'au moins une fonction dudit système informatique (10) sur la base de la valeur actuelle de l'angle d'ouverture ($\alpha_{LID}$),
dans lequel le premier élément matériel (12 ; 14) est couplé au second élément matériel (14 ; 12) par une charnière (15) qui forme une contrainte de rotation autour d'un axe de rotation (R),
**caractérisé en ce que** :

la mise à jour récursive inclut la fusion des mesures d'accélération des premier et second accéléromètres (20, 22) avec les mesures de vitesse angulaire des premier et second gyroscopes (24, 26), l'attribution aux mesures de vitesse angulaire d'un poids qui est supérieur et, par conséquent, l'attribution aux mesures d'accélération d'un poids qui est inférieur, plus un angle entre l'axe de rotation (R) et un axe de référence (Z) parallèle à un vecteur d'accélération gravitationnelle (g) diminue ;
en variante :
la mise à jour récursive inclut la fusion des mesures d'accélération des premier et second accéléromètres (20, 22) avec les mesures de vitesse angulaire des premier et second gyroscopes (24, 26), l'attribution aux mesures de vitesse angulaire d'un poids qui est supérieur et, par conséquent, l'attribution aux mesures d'accélération d'un poids qui est inférieur, plus l'axe de rotation (R) coïncide avec ou se rapproche d'un axe de référence (Z) parallèle à un vecteur d'accélération gravitationnelle (g).

2. Système informatique selon la revendication 1, l'unité de calcul (27, 28) étant en outre configurée pour réaliser les opérations suivantes :

l'estimation, sur la base des mesures d'accélération, d'une première valeur intermédiaire ($V\alpha_{LID\_ACC}$) dudit angle d'ouverture ($\alpha_{LID}$), qui représente une première orientation angulaire du premier élément matériel (12) par rapport au second élément matériel (14) ; et
l'estimation, sur la base des mesures de vitesse angulaire, d'une seconde valeur intermédiaire ($V\alpha_{LID\_GYR}$) dudit angle d'ouverture ($\alpha_{LID}$), qui représente une seconde orientation angulaire du premier élément matériel (12) par rapport au second élément matériel (14),
dans lequel la mise à jour récursive inclut la réalisation d'une somme pondérée de la première valeur intermédiaire ($V\alpha_{LID\_ACC}$) et de la seconde valeur intermédiaire ($V\alpha_{LID\_GYR}$).

3. Système informatique selon la revendication 1 ou la revendication 2, dans lequel l'unité de calcul (27, 28) est configurée pour mettre à jour de manière récursive la valeur actuelle dudit angle d'ouverture ($\alpha_{LID}$) sur la base d'un poids (k) indiquant une fiabilité desdites mesures de signaux d'accélération et de mesures de vitesse angulaire.

4. Système informatique selon l'une quelconque des revendications précédentes, dans lequel l'opération de mise à jour récursive inclut la mise en œuvre d'un filtrage passe-bas de la première valeur intermédiaire ($V\alpha_{LID\_ACC}$) et d'un filtrage passe-haut de la seconde valeur intermédiaire ($V\alpha_{LID\_GYR}$) au moyen d'un filtre complémentaire.

5. Système informatique selon la revendication 2, dans lequel l'opération de réalisation de la somme pondérée inclut la réalisation de l'opération :

$$k \cdot V\alpha_{LID\_ACC} + (1-k) \cdot V\alpha_{LID\_GYR}$$

où $V\alpha_{LID\_ACC}$ est la première valeur intermédiaire, $V\alpha_{LID\_GYR}$ est la seconde valeur intermédiaire, et k est un poids ayant une valeur égale ou supérieure à 0 et inférieure à 1.

6. Système informatique selon la revendication 2, dans lequel l'opération de réalisation de la somme pondérée inclut la mise en œuvre d'un filtre complémentaire récursif défini par :

$$V\alpha_{LID}(t) = k \cdot V\alpha_{LID\_ACC}(t) + (1-k) \cdot (\Delta_\alpha + V\alpha_{LID}(t-1))$$

où :

$V\alpha_{LID}(t)$ est la valeur actuelle de l'angle d'ouverture ($\alpha_{LID}$) ;

k est un poids indiquant une fiabilité desdits signaux de mesure d'orientation relative des premier et second éléments matériels ;

$V\alpha_{LID\_ACC}(t)$ est la première valeur intermédiaire ;

$\Delta_\alpha$ est une variation angulaire obtenue en fonction d'une première valeur ($\omega_1$) et d'une seconde valeur ($\omega_2$) de vitesse angulaire mesurées respectivement par les premier et second gyroscopes (24, 26) ; et

$V\alpha_{LID}(t-1)$ est une valeur de l'angle d'ouverture précédant dans le temps la valeur actuelle.

**7.** Système informatique selon la revendication 2 ou l'une quelconque des revendications 3 à 6 lorsqu'il dépend de la revendication 2, dans lequel les première et seconde valeurs intermédiaires ($V\alpha_{LID\_ACC}$, $V\alpha_{LID\_GYR}$) sont des valeurs de l'angle d'ouverture ($\alpha_{LID\_}$) du premier élément matériel (12) par rapport au second élément matériel (14).

**8.** Système informatique selon l'une quelconque des revendications précédentes, dans lequel le premier élément matériel (12) est doté d'un premier dispositif (18) d'interaction avec un utilisateur, et le second élément matériel (14) est doté d'un second dispositif (16) d'interaction avec ledit utilisateur,

dans lequel les premier et second dispositifs d'interaction (18, 16) définissent une première surface (12a) et, respectivement, une seconde surface (14a) directement opposées l'une à l'autre dans un premier état de fonctionnement du système informatique (10),
dans lequel :

le premier accéléromètre (20) est un accéléromètre triaxial ayant un premier axe de détection ($z_1$), un deuxième axe de détection ($y_1$), et un troisième axe de détection ($x_1$) propres à lui-même, qui est configuré pour détecter une accélération du premier élément matériel (12) par rapport au second élément matériel (14) hors d'un plan horizontal (XY) parallèle, dans la première condition de fonctionnement, aux première et seconde surfaces (12a, 14a), lesdits signaux générés par le premier accéléromètre (20) comportant des valeurs d'accélération suivant lesdits premier, deuxième et troisième axes de détection du premier accéléromètre (20),
le second accéléromètre (22) est un accéléromètre triaxial ayant un premier axe de détection ($z_2$), un deuxième axe de détection ($y_2$), et un troisième axe de détection ($x_2$) propres à lui-même, qui est configuré pour détecter une accélération du premier élément matériel (12) par rapport au second élément matériel (14) hors d'un plan horizontal (XY), lesdits signaux générés par le second accéléromètre (22) comportant des valeurs d'accélération suivant lesdits premier, deuxième, et troisième axes de détection du second accéléromètre (22),
dans lequel les premier et second éléments matériels (12, 14) peuvent être orientés l'un par rapport à l'autre de telle manière que, dans une deuxième condition de fonctionnement du système informatique (10), la première surface (12a) soit orthogonale à la seconde surface (14a), et dans lequel :

le premier accéléromètre (20) est orienté de telle manière que, dans la première condition de fonctionnement, seul son premier axe de détection ($z_1$) soit soumis à l'accélération gravitationnelle et, dans la deuxième condition de fonctionnement, seul son deuxième axe de détection ($y_1$) soit soumis à l'accélération gravitationnelle,
ladite unité de calcul étant configurée pour réduire un poids attribué à la première valeur intermédiaire ($\alpha_{LID\_ACC}$) et, en même temps, augmenter un poids attribué à la seconde valeur intermédiaire ($\alpha_{LID\_GYR}$) lors du calcul de ladite somme, qui est pondérée en fonction de la valeur d'accélération détectée suivant le troisième axe de détection ($x_1$) du premier accéléromètre (20) dans une troisième condition de fonctionnement dans laquelle le troisième axe de détection ($x_1$) du premier accéléromètre (20) est soumis à une accélération gravitationnelle.

**9.** Système informatique selon la revendication 8 en combinaison avec l'une quelconque des revendications 3, 5, 6, dans lequel, dans la troisième condition de fonctionnement, le troisième axe de détection ($x_1$) du premier accéléromètre (20) forme un angle autre que 90° avec le vecteur d'accélération gravitationnelle (g), ledit poids (k) ayant une valeur qui est une fonction de la valeur de l'angle entre le troisième axe de détection ($x_1$) du premier accéléromètre (20) et le vecteur d'accélération gravitationnelle (g).

**10.** Système informatique selon la revendication 9, dans lequel, dans la première condition de fonctionnement, le premier axe de détection ($z_1$) du premier accéléromètre (20) est parallèle au vecteur d'accélération gravitationnelle (g), tandis que les deuxième et troisième axes de détection ($y_1$, $x_1$) sont perpendiculaires au vecteur d'accélération gravitationnelle (g) ; et, dans la deuxième condition de fonctionnement, le deuxième axe de détection ($y_1$) du premier accéléromètre (20) est parallèle au vecteur d'accélération gravitationnelle (g), tandis que les premier et troisième axes de détection ($z_1$, $x_1$) sont perpendiculaires au vecteur d'accélération gravitationnelle (g).

11. Procédé de commande d'au moins un paramètre d'un système informatique (10) en fonction d'une valeur d'un angle d'ouverture ($\alpha_{LID}$) entre un premier élément matériel (12 ; 14) et un second élément matériel (14 ; 12), dans lequel le premier élément matériel (12 ; 14) loge un premier accéléromètre (20 ; 22) et un premier gyroscope (24 ; 26) et le second élément matériel (14 ; 12) loge un second accéléromètre (22 ; 20) et un second gyroscope (26 ; 24) et peut être orienté par rapport au premier élément matériel (12),

le procédé comprenant les étapes suivantes :

l'acquisition, à partir des premier et second accéléromètres (20, 22), de signaux respectifs de mesures d'accélération et, à partir des premier et second gyroscopes (24, 26), de signaux respectifs de mesures de vitesse angulaire, lesdits signaux de mesures d'accélération et de vitesse angulaire étant indicatifs d'une orientation relative du premier élément matériel par rapport au second élément matériel, et inversement ;
la mise à jour récursive d'une valeur actuelle dudit angle d'ouverture ($\alpha_{LID}$) sur la base desdits signaux de mesures d'accélération et de vitesse angulaire ; et
la commande d'au moins une fonction dudit système informatique (10) en fonction de la valeur actuelle de l'angle d'ouverture ($\alpha_{LID}$),
dans lequel le premier élément matériel (12 ; 14) est couplé au second élément matériel (14 ; 12) par une charnière (15) qui forme une contrainte de rotation autour d'un axe de rotation (R),
le procédé étant **caractérisé en ce qu'**il comprend en outre l'étape suivante :

la mise à jour récursive inclut la fusion des mesures d'accélération des premier et second accéléromètres (20, 22) avec les mesures de vitesse angulaire des premier et second gyroscopes (24, 26), l'attribution aux mesures de vitesse angulaire d'un poids qui est supérieur et, par conséquent, l'attribution aux mesures d'accélération d'un poids qui est inférieur, plus un angle entre l'axe de rotation (R) et un axe de référence (Z) parallèle à un vecteur d'accélération gravitationnelle (g) diminue ;
ou, en variante, l'étape suivante :
la mise à jour récursive inclut la fusion des mesures d'accélération des premier et second accéléromètres (20, 22) avec les mesures de vitesse angulaire des premier et second gyroscopes (24, 26), l'attribution aux mesures de vitesse angulaire d'un poids qui est supérieur et, par conséquent, l'attribution aux mesures d'accélération d'un poids qui est inférieur, plus l'axe de rotation (R) coïncide avec ou se rapproche d'un axe de référence (Z) parallèle à un vecteur d'accélération gravitationnelle (g).

12. Procédé selon la revendication 11, comprenant en outre les étapes suivantes :

l'estimation, sur la base des mesures d'accélération, d'une première valeur intermédiaire ($V\alpha_{LID\_ACC}$) dudit angle d'ouverture ($\alpha_{LID}$), qui représente une première orientation angulaire du premier élément matériel (12) par rapport au second élément matériel (14) ; et
l'estimation, sur la base des mesures de vitesse angulaire, d'une seconde valeur intermédiaire ($V\alpha_{LID\_GYR}$) dudit angle d'ouverture ($\alpha_{LID}$), qui représente une seconde orientation angulaire du premier élément matériel (12) par rapport au second élément matériel (14),
dans lequel la mise à jour récursive inclut la réalisation d'une somme pondérée de la première valeur intermédiaire ($V\alpha_{LID\_ACC}$) et de la seconde valeur intermédiaire ($V\alpha_{LID\_GYR}$).

FIG. 1

FIG. 2

EP 4 224 285 B1

FIG. 3

# FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015130725 A

- EP 2151734 A2